# EUROPÄISCHE PATENTSCHRIFT

(11) **EP 1 453 576 B1**
(45) Veröffentlichungstag und Bekanntmachung des Hinweises auf die Patenterteilung: **04.05.2005**
(21) Anmeldenummer: 02794948.6
(22) Anmeldetag: 13.12.2002
(51) Int. Cl.: A62C 27/00

(54) **FEUERWEHRFAHRZEUG**
FIRE ENGINE
VEHICULE INCENDIE

(30) Priorität: 13.12.2001 AT 19572001
(43) Veröffentlichungstag der Anmeldung: 08.09.2004
(73) Patentinhaber: Rosenbauer International Aktiengesellschaft, 4060 Leonding (AT)
(72) Erfinder: RONACHER, Alexander, A-4063 Hörsching (AT); HOCHDANINGER, Franz, A-4821 Lauffen (AT)
(74) Vertreter: Secklehner, Günter, Dr.
(86) Internationale Anmeldenummer: PCT/AT2002/000350
(87) Internationale Veröffentlichungsnummer: WO 2003/049987

(56) Entgegenhaltungen:
- AT-B- 406 573
- DE-A- 3 526 766
- US-A- 4 294 485
- US-A- 4 351 554

## Beschreibung

Die Erfindung betrifft einen Lastkraftwagen, wie im Oberbegriff des Anspruches 1 beschrieben.

Aus der DE 35 26 766 A1, der selben Anmelderin, ist ein Lastkraftwagen bekannt mit am Fahrgestellrahmen frontseitig angeordneten, voneinander unabhängigen und getrennten Kabinen, mit einer Fahrerkabine mit allen Einrichtungen für den Betrieb des Lastkraftwagens und einer unmittelbar dahinter angeordneten Mannschafts- und/oder Gerätekabine. Die Fahrerkabine, in der auch Sitze für Beifahrer angeordnet sind, ist mit der Mannschafts- und/oder Gerätekabine durch Öffnungen in einer Rückwand der Fahrerkabine und einer dieser zugewandten Frontwand der Mannschafts- und/oder Gerätekabine, die einen Durchgang für Personen ausbilden, verbunden. Eine die Öffnungen umgrenzende Dichtungsanordnung bewirkt einen dichten Abschluß nach Außen. Die Fahrerkabine ist bei dem Lastkraftwagen im Bereich der vorderen Frontwand am Fahrgestellrahmen um eine zu einer Aufstandsfläche parallel und zur Fahrtrichtung senkrecht verlaufende Achse schwenkbar gelagert, um im Falle von Wartungsarbeiten den unter Flur angeordneten Antriebsmotor sowie Nebenaggregate zugänglich zu machen. Nachteilig ist in einem solchen Fall die aufwendige Manipulation an der Dichtungsanordnung, um diese von der Fahrerkabine zu lösen und das Verschwenken der Fahrerkabine vornehmen zu können.

Weiter ist aus der DE 38 26 542 A1 ein Einstieg zum Fahrerhaus eines Nutzfahrzeuges bekannt, insbesondere für einen Frontlenker-LKW, bei dem der Einstieg in die Fahrerkabine durch die Anordnung als einer als Drehtreppe ausgebildeten Einstiegstreppe, erleichtert wird. Diese wird beim Öffnen der Einstiegstüre zur Fahrerkabine aus einer in der Außenfront versenkten Stellung in eine nach Außen verschwenkte Stellung mitbetätigt oder mittels einer eigenen Antriebsanordnung verstellt. Die Drehtreppe ist über eine zur Aufstandsfläche vertikal verlaufende Achse innerhalb des Aufbaues gelagert und es weisen die Trittstufen in ihrer Projektion auf die Aufstandsfläche etwa Kreisausschnittsflächen auf. Damit wird ein müheloser Einstieg in die Fahrerkabine für den Fahrzeuglenker erreicht, wobei ein unbeabsichtigtes Schwenken während des Einstieges die Sicherheit für den Benutzer beeinträchtigt.

Aus der AT 406 573 B ist ein Kastenaufbau für ein Einsatzfahrzeug, insbesondere ein Feuerwehrfahrzeug, bekannt, bei dem zwischen der Fahrerkabine und einem stirnseitigen Quertragelement für einen dahinter liegenden Kastenaufbau zur Verbindung der Fahrerkabine und des Kastenaufbaus ein Durchgang vorgesehen ist und im Bereich von Seitenwänden des Kastenaufbaus und einer Dachtragplatte ein umlaufendes, elastisches Übergangs- und Dichtelement angeordnet ist, welches eine dichte Verbindung herstellt, aber die unterschiedlichen Schwingungssysteme nicht behindert. Ein derartiges Übergangs- und Dichtelement stellt eine sehr aufwendige Vorrichtung dar, falls eine verschwenkbare Fahrerkabine vorgesehen werden soll.

Die Aufgabe der vorliegenden Erfindung liegt darin, einen Lastkraftwagen, insbesondere ein Feuerwehr-Einsatzfahrzeug zu schaffen, welches bei der Wartung und beim Betrieb einfach zu handhaben und bei den unterschiedlichen Einsatzbedingungen betriebssicher ist. Diese Aufgabe der Erfindung wird durch die im Kennzeichenteil des Patentanspruches 1 wiedergegebenen Merkmale erreicht. Der überraschende Vorteil dieser Lösung liegt darin, daß bei einem derartigen aus Fahrerkabine und Mannschafts- und/oder Gerätekabine bestehenden Kabinenaufbau auch bei einer für Einsatzfahrzeuge erforderlichen erhöhten Bodenfreiheit die Vorbereitung des Einsatzfahrzeuges für die Vornahme von Wartungsarbeiten an den vielfach unter Flur angeordneten Antriebs- und Geräteaggregaten aber auch ein rascher und sicherer Einstieg für die Einsatzkräfte erreicht wird.

Vorteilhaft ist dabei eine Ausbildung nach Anspruch 2, weil dadurch der unmittelbare Anschlagbereich eines Balgdichtelementes an der Rückwand der Fahrerkabine vor einem Zugriff von Außen gesichert ist und weiters ein derartiger Deckrahmen eine Absicherung für das Balgdichtelement vor mechanischen Beschädigungen bildet.

Gemäß der vorteilhaften Weiterbildung wie im Anspruch 3 beschrieben, wird ein Aufschwenken der Fahrerkabine zur Freilegung der unter Flur angeordneten Aggregaten ohne langwierige Manipulation an Befestigungseinrichtungen ermöglicht und sind auch Beschädigungen ausgeschlossen, die durch unsachgemäße Vorbereitungen eines derartigen Aufschwenkvorganges vielfach vorkommen.

Durch eine Ausbildung wie im Anspruch 4 beschrieben, wird ein konstruktiv sehr einfacher Aufbau zur Halterung der die Ankoppelung bewirkenden Dauermagnete erreicht.

Gemäß der vorteilhaften Weiterbildung wie im Anspruch 5 beschrieben, wird eine Schwingungsentkoppelung erreicht und damit durch Schwingungen auftretende Belastungen an den mechanischen Bauteilen verringert.

Gemäß den bevorzugten Weiterbildungen wie in den Ansprüchen 6 und 7 beschrieben, wird ein sicherer Anschluß des Balgdichtelementes an der Rückwand der Fahrerkabine auch bei den im Fahrbetrieb auftretenden hohen Stoß- und Schwingungsbelastungen erreicht.

Vorteilhaft sind aber auch Ausbildungen gemäß den Ansprüchen 8 bis 10, weil dadurch eine Absicherung des Balgdichtelementes vor mechanischen Beschädigungen auf einfache Weise erreicht wird und der Verschwenkvorgang beim Aufschwenken der Fahrerkabine ungehindert vor sich gehen kann.

Gemäß der vorteilhaften Ausbildung wie im Anspruch 11 beschrieben, wird eine hohe Lebensdauer und Funktionssicherheit erreicht.

Durch die vorteilhaften Ausgestaltungen gemäß den Ansprüchen 12 bis 14 kommt es zu einem positionsgenauen Andocken der Verbindungsvorrichtung bei der Wiederherstellung der Verbindung beim Verschwenken der Fahrerkabine aus der aufgeschwenkten Lage in die Normallage, ohne daß Manipulationen zur Positionierung erforderlich werden.

Gemäß der Ausbildung wie im Anspruch 15 beschrieben, werden kostengünstige und dauerhafte Elemente erreicht.

Vorteilhafte Weiterbildungen kennzeichnen die Ansprüche 16 bis 23, wodurch eine sehr einfache Handhabung der Aufstiegsvorrichtung in Kombination mit der Türstellung einer Einstiegsöffnung erreicht und unabhängig von der Stellung die Position durch die beim Betreten der Aufstiegsvorrichtung auf diese einwirkende Belastung gesichert und am weiteren Verschwenken gehindert wird. Es sind hierzu keinerlei weitere Manipulationen erforderlich, wodurch ein hoher Sicherheitsfaktor erreicht wird und die die Aufstiegsvorrichtung benutzenden Einsatzkräfte entlastet werden. Weiters ist sichergestellt, daß durch das so ausgebildete Treppenelement kein ungesicherter Freiraum bei der aufgeschwenkten Stellung einer Türe in deren Verlängerung entsteht und damit eine Absturzgefahr vermieden wird.

Weitere vorteilhafte Ausgestaltungen beschreiben auch die Ansprüche 24 bis 27, weil dadurch abgesicherte Stoß- und Eckverbindungen bei sogenannten Paneelen in Verbundbauweise, bestehend aus Decklagen und Zwischenlagen, erreicht werden, ohne der Gefahr einer Auftrennung der Lagen durch Belastungen, insbesondere Schwingungsbelastungen. Weiters werden hohe Haltekräfte und eine vereinfachte Montage gewährleistet.

Durch die im Anspruch 28 gekennzeichneten vorteilhaften Ausbildung wird das einer Vereisungsgefahr ausgesetzte Versorgungssystem für Löschmittel wirkungsvoll geschützt und ist damit ein gesicherter Einsatz auch unter extremen Bedingungen, wie sie im Winterbetrieb auftreten, gegeben.

Möglich ist aber auch eine Weiterbildung nach Anspruch 29, wonach das Geschehen am Einsatzort visuell weitergeleitet werden kann und damit unabhängig vom Einsatzfahrzeug positionierte Kommando- und/oder Einsatzkräfte mit für die Entscheidungen des Einsatzes entsprechenden Informationen versorgt werden.

Schließlich ist auch eine Ausbildung wie im Anspruch 30 beschrieben vorteilhaft, weil dadurch die Steuerung- und Überwachung wesentlicher für den Einsatz erforderlicher, technischer und kommunikativer Einrichtungen des Einsatzfahrzeuges zusätzlich auch bei Bedarf von einem vom Einsatzfahrzeug unabhängigen Standort aus vorgenommen werden kann.

Zum besseren Verständnis der Erfindung wird diese anhand der in den Zeichnungen dargestellten Ausführungsbeispielen näher erläutert.

Es zeigen:
- Fig. 1: einen erfindungsgemäßen Lastkraftwagen insbesondere ein Feuerwehr-Einsatzfahrzeug in Ansicht;
- Fig. 2: eine erfindungsgemäße Verbindungsvorrichtung zwischen Kabinen des erfindungsgemäßen Kraftfahrzeuges, in perspektivischer Darstellung;
- Fig. 3: die Verbindungsvorrichtung geschnitten längs der Fahrzeugmittelebene;
- Fig. 4: eine erfindungsgemäße Aufstiegsvorrichtung des erfindungsgemäßen Lastkraftwagens in perspektivischer Darstellung;
- Fig. 5: die Aufstiegsvorrichtung teilweise geschnitten;
- Fig. 6: ein Verbindungsbereich des Aufbaus des erfindungsgemäßen Lastkraftwagens, geschnitten;
- Fig. 7: eine andere Ausführung des Verbindungsbereiches des Aufbaues, geschnitten;
- Fig. 8: eine weitere Ausführung des Verbindungsbereiches des Aufbaus des Lastkraftwagens, geschnitten;
- Fig. 9: ein Kühl- und/oder Heizkreislauf des erfindungsgemäßen Lastkraftwagens, in schematischer Darstellung;
- Fig. 10: eine zentrale Entleerungsvorrichtung für Aggregate und Leitungen des erfindungsgemäßen Lastkraftwagens;
- Fig. 11: eine Beleuchtungs- und/oder Kameraausstattung an einem ausfahrbaren Mast des erfindungsgemäßen Lastkraftwagens.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

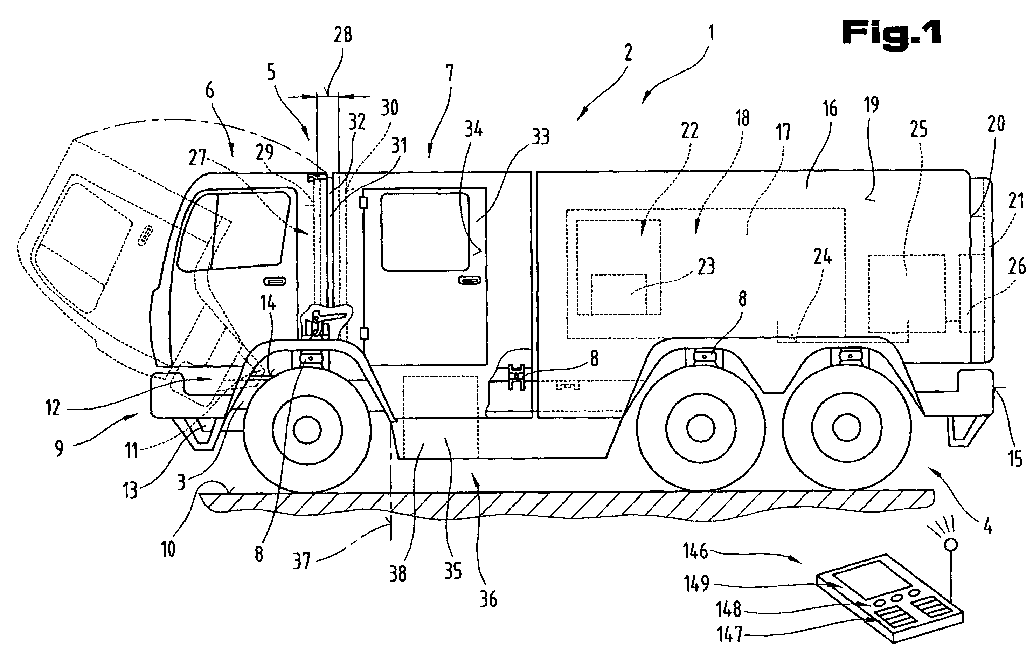

In der Fig. 1 ist ein Lastkraftwagen 1, insbesondere ein Feuerwehr-Einsatzfahrzeug 2, gezeigt. Auf einem Fahrgestellrahmen 3 eines Fahrgestell 4 ist eine Doppelkabine 5, bestehend aus einer Fahrerkabine 6 und einer Mannschafts- und/oder Gerätekabine 7 über Dämpfungselemente 8 aufgelagert. Die Fahrerkabine 6 ist in einem frontseitigen Endbereich 9 um eine zu einer Aufstandsfläche 10 parallel und zur Längserstreckung des Lastkraftwagens 1 senkrecht verlaufende Achse 11 in einer Schwenklageranordnung 12 am Fahrgestellrahmen 3 verschwenkbar gelagert. Eine derartige Ausbildung ist bei Lastkraftwagen 1, bei einer teilweisen Anordnung eines Antriebsmotors 13 mit seinen Nebenaggregaten im Fahrgestellrahmen 3, also unterhalb eines Bodens 14 der Fahrerkabine 6 vorgesehen, um eine Zugänglichkeit zur Durchführung von Wartungs- und Reparaturarbeiten am Antriebsmotor 13 und seinen Nebenaggregaten zu gewährleisten.

Weiters ist am Fahrgestellrahmen 3, im Anschluß an die Doppelkabine 5 in Richtung eines hinteren Endbereiches 15 des Lastkraftwagens 1, ein Aufbau 16 angeordnet, der z.B. einen Tank 17 für Löschmittel 18 und diesem umgebende über in Längsseitenwände 19 und Querseitenwände 20 angeordnete Rolläden 21 zugängliche Einbauten 22 zur Aufnahme von Geräten 23, z.B. Werkzeuge, Bergegeräte, etc. Weiters ist im Nutzaufbau 16 zur Ausbringung des Löschmittels 18 eine über Versorgungsleitungen 24 an den Tank 17 angeschlossene Löschmittelpumpe 25 mit der entsprechenden Steuer- und Überwachungseinrichtung 26 angeordnet.

Die Fahrerkabine 6 ist mit der Mannschafts- und/oder Gerätekabine 7 einen Durchgang 27 ausbildend und eine Distanz 28 zwischen einer Rückwand 29 der Fahrerkabine 6 und einer dieser gegenüberliegenden Querwand 30 der Mannschafts- und/oder Gerätekabine 7 überbrückend, über eine Verbindungsvorrichtung 31 im wesentlichen mit einem Balgdichtelement 32 dichtend verbunden.

Weiters ist der Fig. 1 zu entnehmen, daß einer Tür 33 einer Einstiegsöffnung 34 der Mannschafts- und/oder Gerätekabine 7 eine durch ein Treppenelement 35 gebildete Aufstiegsvorrichtung 36 zugeordnet ist. Das Treppenelement 35 ist um eine innerhalb der Längsseitenwand 19 der Mannschafts- und/oder Gerätekabine 7 angeordnete, senkrecht zur Aufstandsfläche 10 verlaufende Schwenkachse 37 verschwenkbar gelagert und zwischen einer Stellung, bei der ein Wandteil 38 fluchtend mit der Längsseitenwand 19 verläuft, in eine aufgeschwenkte Stellung in Abhängigkeit einer Öffnungsstellung der Tür 33, die Längsseitenwand 19 überragend, verschwenkbar.

Auf weitere Details der Ausstattung des Lastkraftwagens 1, wie sie zum Fahrbetrieb, zur Aufnahme von Personen etc. erforderlich sind, braucht im einzelnen nicht weiter eingegangen zu werden, da diese entsprechend den jeweils vorgesehenen Einsatzzweck des Lastkraftwagens 1 angepaßt werden und eine Selbstverständlichkeit darstellen.

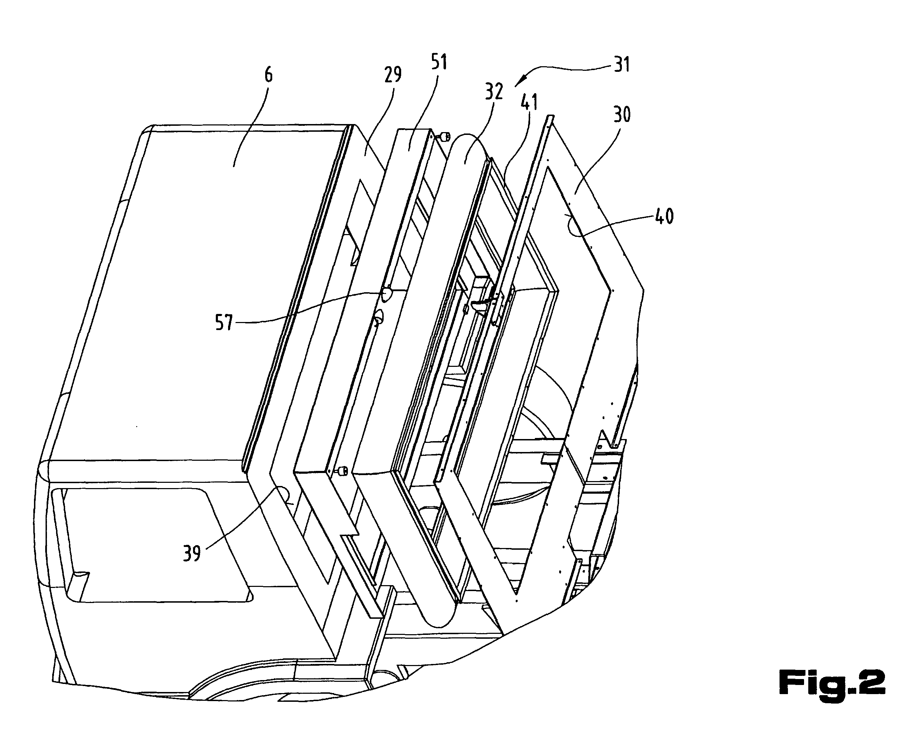

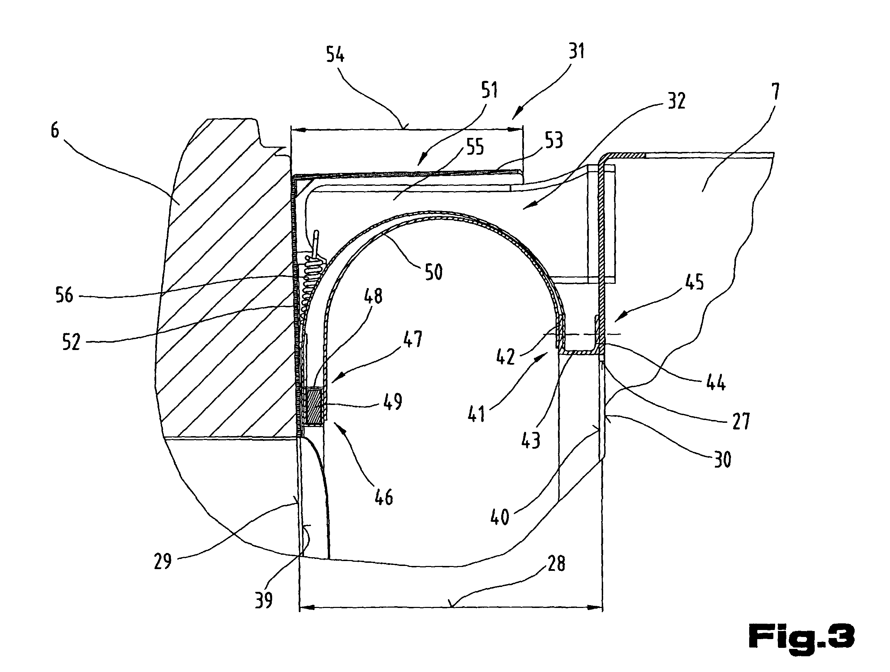

In den Fig. 2 und 3 ist nun im Detail die Verbindungsvorrichtung 31 gezeigt, wobei die Fig. 2, die Verbindungsvorrichtung 31 bildenden Einzelelemente getrennt in Art einer Montageanleitung zeigt und in Fig. 3 die fertig montierte Verbindungsvorrichtung 31 im angedockten Zustand dargestellt ist. In der Rückwand 29 der Fahrerkabine 6 und der Querwand 30 der Mannschafts- und/oder Gerätekabine 7 sind den Durchgang 27 ausbildend etwa rechteckförmige Ausschnitte 39, 40 angeordnet. Damit wird eine begehbare direkte Verbindung zwischen der Fahrerkabine 6 und der Mannschafts- und/oder Gerätekabine 7 erreicht. Zur Abdichtung des Durchganges 27 gegenüber der Umgebung ist zwischen der Rückwand 29 der Fahrerkabine 6 und der Querwand 30 der Mannschafts- und/oder Gerätekabine 7 die Distanz 28 überbrückend die Verbindungsvorrichtung 31, die Ausschnitte 39, 40 rahmenförmig umfassend angeordnet. Diese besteht aus dem aus einem flexiblen Material bestehenden Balgdichtelement 32, z.B. aus einem Kunststoff beschichteten Textilgewebe, Gummi, Kunststoff etc., das mit einem Befestigungsrahmen 41, z.B. einem Schenkel 42 eines U- Profils 43, verbunden ist und das mit einem weiteren Schenkel 44 an der Querwand 30 der Mannschafts- und/oder Gerätekabine 7 über lösbare Verbindungsmittel 45 befestigt ist. Damit ist ein dichter Anschluß des Balgdichtelementes 32 an der Querwand 30 erreicht. Der weitere dichte Anschluß des Balgdichtelementes 32 an der Rückwand 29 der Fahrerkabine 6 wird durch eine lösbare Haftvorrichtung 46 gebildet. Diese Haftvorrichtung 46 wird durch einen den Ausschnitt 39 der Rückwand 29 umfassenden Anschlagrahmen 47, z.B. aus einem rechteckigen Hohlprofil 48, gebildet, in dem bereichsweise stab- bzw. leistenförmige Dauermagnete 49 angeordnet sind. Durch die magnetische Haltekraft der Dauermagnete 49 wird in der Normallage der Fahrerkabine 6 ein dichtes Anliegen des Anschlagrahmens 47 und damit des Balgdichtelementes 32 an der Rückwand 29 erreicht. Zur Stabilisierung und Formhaltung des flexiblen Balgdichtelementes 32, in einer in etwa bogenförmig gekrümmten Querschnittsform, sind zwischen dem Schenkel 42 des Befestigungsrahmens 41 und dem Hohlprofil 48 bogenförmig gekrümmte Versteifungsrippen 50, z.B. aus Federstahlbändern etc., vorgesehen. Zur Absicherung des Balgdichtelementes 32 und der Verbesserung der Dichtanordnung in Form der Ausgestaltung eines Labyrinthspaltes ist zusätzlich, bevorzugt auf der Rückwand 29, ein den Ausschnitt 39 und das Balgdichtelement 32 umfassender Deckrahmen 51 angeordnet, der aus einem L-förmigen Blechprofil gebildet ist und mit einem Schenkel 52 an der Rückwand 29 befestigt ist und ein weiterer Schenkel 53 das Balgdichtelement 32 überlappend in Richtung der Mannschafts- und/oder Gerätekabine ragt. Eine Schenkelbreit 54 des vorragenden Schenkels 53 ist kleiner als die Distanz 28. Zur Stabilisierung des Balkdichtelementes 32 mit dem Anschlagrahmen 47 und dessen Positionierung im bezug auf die Lage zum Ausschnitt 39 der Rückwand 29 bzw. damit auch zur Querwand 30 ist auf dieser zumindest ein in Richtung der Fahrerkabine 6 vorragender Haltearm 55 befestigt, an dem z.B. über eine Spiral-Zugfeder 56 der Anschlagrahmen 47 elastisch nachgebend positioniert gehalten wird. Damit wird einerseits sichergestellt, daß bei einem Andocken des Anschlagrahmens 47, beim Aufkippen der Fahrerkabine 6 in die Normallage, ohne manueller Einjustierung, die Grundstellung des Anschlagrahmens gegeben ist. Durch die Halterung der Spiralzugfeder 56 ist aber anderseits ein Ausgleich der unterschiedlichen Bewegungen der Fahrerkabine 6 und der Mannschafts- und/oder Gerätekabine 7 durch unterschiedliche Belastungen, die im Fahrbetrieb auftreten, möglich, ohne das ein Lösen der Haftvorrichtung 46 eintritt. Zusätzlich ist es noch möglich, durch die Anordnung von Dämpfungselementen 47 im Anlagebereich des Anschlagrahmens Schwingungen wirkungsvoll abzubauen und die Position zu sichern.

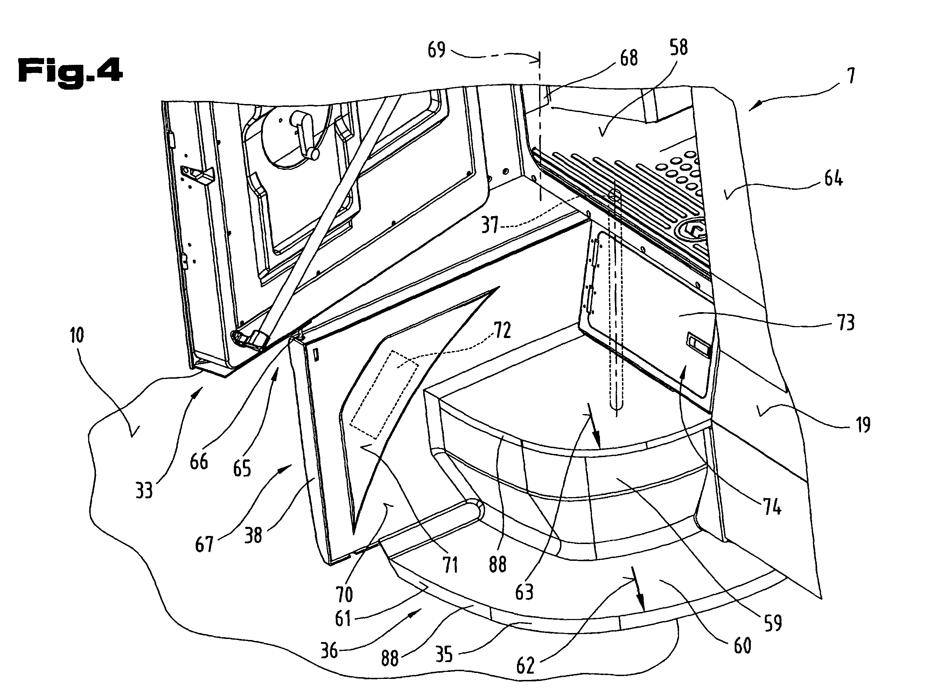

In der Fig. 4 ist die in der Längsseitenwand 19, im Bereich der Tür 33 unterhalb eines Bodens 58 zum erleichterten Einstieg in die Mannschafts- und/oder Gerätekabine 7, angeordnete Aufstiegsvorrichtung 36 gezeigt. In der Darstellung ist die Aufstiegsvorrichtung 36 in ausgeschwenkter Lage dargestellt, bei der das im wesentlichen aus zwei Treppenstufen 59, 60 bestehende Treppenelement 35 bei aufgeschwenkter Tür 33 für den Aufstieg benutzbar ist. Eine äußere Umrißlinie des Treppenelementes 35 entspricht in etwa einem viertel Kreisbogen, wobei die der Aufstandsfläche 10 nächstgelegene Treppenstufe 60 einen größeren Radius 62 aufweist, als ein Radius 63 der den Boden 58 näher liegenden Treppenstufe 59. Das Treppenelement 35 ist bewegungsverbunden mit dem Wandteil 38, der in eingeschwenkter Lage der Aufstiegsvorrichtung 36 fluchtend mit der Längsseitenwand 19 verläuft. Wie bereits in der Fig. 1 beschrieben, verläuft die Verschwenkachse 37 senkrecht zur Aufstandsfläche 10 und ist innerhalb einer äußeren Oberfläche 64 der Längsseitenwand 19 angeordnet. Über eine Betätigungsvorrichtung 65, z.B. einem Mitnehmer 66, ist die Tür 33 in einem von der Schwenkachse 37 distanzierten Endbereich 67 mit dem Wandteil 38 und damit mit dem Treppenelement 35 bewegungsverbunden. Bevorzugt ist die Schwenkachse 37 des Treppenelementes 35 exzentrisch zu einer durch eine Scharnieranordnung 68 der Tür 33 gebildeten Schwenkachse 69, wobei die Anordnung der Schwenkachse 37 im bezug auf die Schwenkachse 69 so gewählt, daß beim Aufschwenken der Tür 33 das Treppenelement 35 vorauseilend aufgeschwenkt wird. Selbstverständlich wäre auch eine fluchtende Anordnung der Schwenkachsen 37, 69 möglich und somit ein gleicher Schwenkwinkel zwischen der Tür 33 und dem Treppenelement 35 erreicht.

Weiters ist der Fig. 4 zu entnehmen, daß im Wandteil 38 in einer den Treppenstufen 59, 60 zugewandten inneren Oberfläche 70 eine Lichtaustrittsfläche 71 zur Beleuchtung durch eine innerhalb des Wandteils 38 integrierte Beleuchtungseinrichtung 72 angeordnet ist.

Von weiterem Vorteil ist im Treppenelement 35, in ungenutzten Hohlräumen z.B. ein durch eine Klappe 73 verschließbares Staufach 74 für Kleinteile, Werkzeuge etc., vorzusehen.

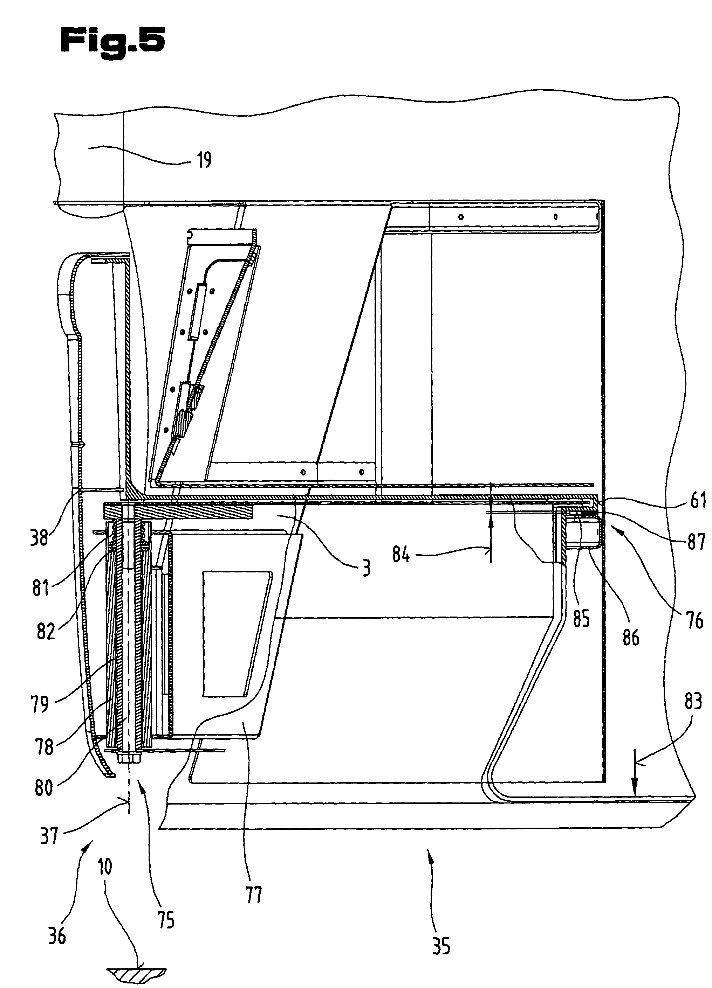

In der Fig. 5 ist nun im Detail die Aufstiegsvorrichtung 36 mit einer die Schwenkachse 37 ausbildenden Lageranordnung 75 und einer Arretiervorrichtung 76 zur Verhinderung der Schwenkbewegung bei Belastung des Treppenelementes 35 gezeigt. In der gezeigten Stellung ist die Aufstiegsvorrichtung 36 in seiner eingeschwenkten Lage. Dabei verläuft der mit den Treppenelement 35 verbundene Wandteil 38 fluchtend mit der Längsseitenwand 19.

Am Fahrgestellrahmen 3 ist über eine Lagerkonsole 77 ein Führungsrohr 78 befestigt, in dem ein mit dem Treppenelement 35 bewegungsverbundenes Lagerrohr 79 gelagert ist. Das Führungsrohr 77 nimmt das Lagerrohr 79 verschwenkbar auf, wobei ein zentrales Befestigungsmittel 80 das Lagerrohr 79 in Richtung der Schwenkachse 37 durchragt und für eine schnelle Demontage und Montage der Aufstiegshilfe und der Befestigung in der Lageranordnung 75 dient. Weiters weist die Lageranordnung 75 eine senkrecht zur Aufstandsfläche 10 verlaufende Verstellbarkeit des Treppenelementes 35 im bezug auf das mit dem Fahrgestellrahmen 3 über die Lagerkonsole 77 fest verbundene Führungsrohr 78 auf. Dies wird durch eine das Lagerrohr 79 umfassende Spiraldruckfeder 81 erreicht, die sich einerseits am Treppenelement 35 und andererseits auf einem Axiallager 82, welches im Führungsrohr 78 angeordnet ist, abstützt. Durch Einfederung der Spiraldruckfeder 81 wird eine vertikale Bewegung des Treppenelementes 35 bei Belastung, gemäß einem Pfeil 83, z.B. beim Betreten der Treppenstufen 59, 60 in Richtung der Aufstandsfläche 10 erreicht. Durch die Anordnung einer am äußeren Umfang des Treppenelementes 35 vorgesehene Arretiervorrichtung 76 die aus einem einer Unterseite 85 der Treppenstufe im Bereich einer äußeren Umrißlinie 61 angeordneten mit dem Fahrgestellrahmen 3 bewegungsfest verbundenen Bremsarm 86 besteht, auf den sich das Treppenelement 35 bei Belastung, gemäß dem Pfeil 83 abstützt wird die Verstellbarkeit in der Schwenklageranordnung begrenzt und eine Arretierung der Verschwenkbarkeit erreicht. Bevorzugt ist auf der Unterseite 85 der Treppenstufe 59 zur Erhöhung der Reibung bevorzugt ein Bremsbelag 87 angeordnet.

Damit wird sichergestellt, daß in einer ausgeschwenkten Lage die Aufstiegsvorrichtung beim Auftreten einer Belastung durch z.B. eine die Aufstiegsvorrichtung 36 benutzende Einsatzkraft eine Schwenkbewegung des Treppenelementes 35 wirkungsvoll verhindert wird und damit die Sicherheit für die Einsatzkraft erreicht wird, ohne daß zusätzliche mechanische Arretiermittel zum Einsatz kommen müssen.

Selbstverständlich ist es auch möglich, die Betätigungsvorrichtung 65 für die Drehtreppe als von der Tür unabhängige Antriebseinrichtung, z.B. durch einen Pneumatikzylinder, Hydraulikzylinder, Elektroantrieb usw., auszubilden.

Als Beleuchtungseinrichtung 72 ist es auch möglich, auf der inneren Oberfläche 70 des Wandteils 38 aus dem Stand der Technik bekannte elektroluminiszierende Folien 88 anzubringen, die über eine entsprechende Steuereinrichtung aus dem Bordnetz des Lastkraftwagens 1 gespeist wird. Eine derartige elektrolominiszierende Folie 88 könnte auch in Stirnflächen der Treppenstufen 59, 60 zur Erhöhung der Sicherheit bei Dunkelheit angeordnet sein.

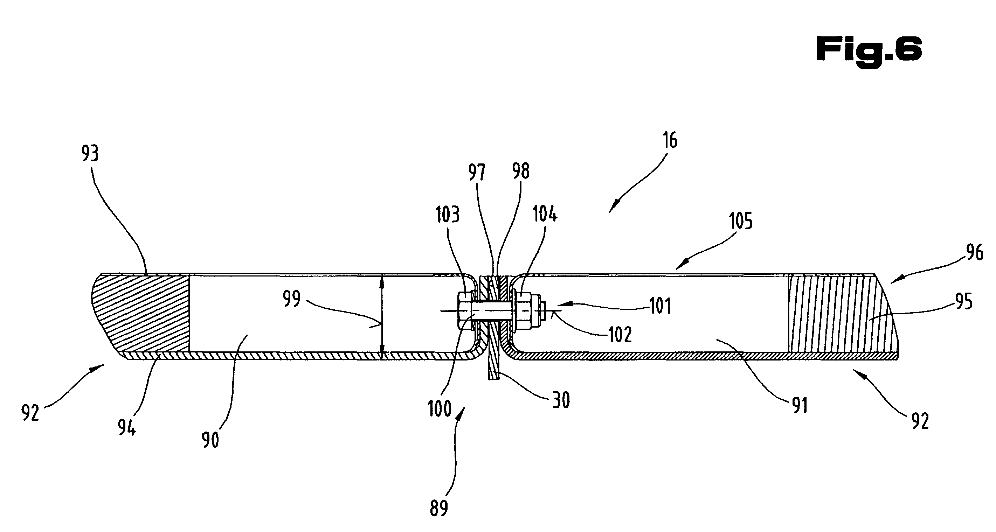

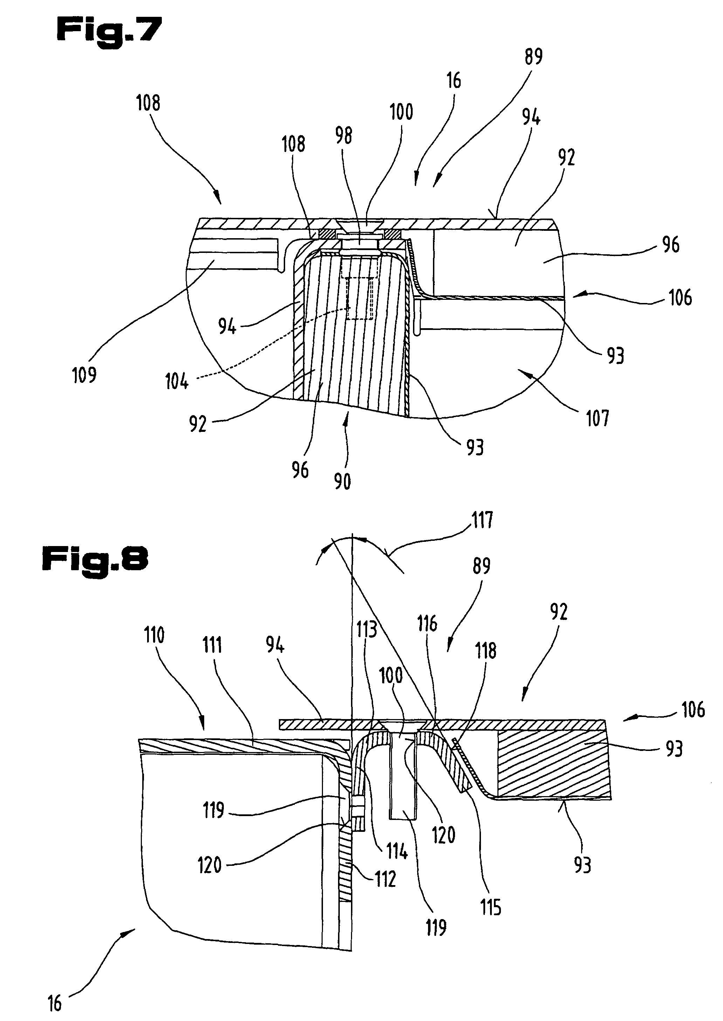

In der Fig. 6 ist ein Verbindungsbereich 89 des Aufbaus 16 des Lastkraftwagens 1 (nicht dargestellt), ein sogenannter Knoten zwischen aneinander stoßenden Längswänden 90, 91 und der Querwand 30, gezeigt. Bevorzugt werden für den Aufbau 16 aus Stabilitäts- und Gründen der Wärmeisolierung mehrschichtige Paneele 92 insbesondere für die Außenummantelung verwendet. Diese Paneele 92 sind aus äußeren Deckschichten 93, 94 und einem Kern 95 gebildet, über den die Deckschichten 93, 94 distanziert gehalten sind und der dem Paneel 92 die entsprechende Stabilität durch z.B. wabenförmige Einlagen geben die stirnseitig mit den Deckschichten 93, 94 verbunden sind und eingebettet in einer Isolationslage 96 angeordnet sind. Bevorzugt werden für einen Aufbau 16 Paneele 92 aus metallischen Deckschichten aus Stahl, Leichtmetallegierungen, Edelstahl verwendet. Die Isolationslage 96 ist bevorzugt ein offenzelliger Kunststoffschaum, womit diese Paneele 92 eine geringe Wärmeleitfähigkeit aufweisen.

Im Verbindungsbereich 89 sind zur Bildung von Stirnflächen 97, 98 die Deckschichten 93, 94 zueinander rechtwinkelig verlaufend abgekantet und überlappen sich nahezu über eine Gesamtdicke 99 der Paneele 92. Im Verbindungsbereich 89 ist zwischen den sich gegenüberliegenden Stirnflächen 97, 98 die Querwand 30, z.B. aus Stahlblech, eingelegt und mit den abgefalzten Deckschichten 93, 94 der Längswände 90, 91 durch Befestigungsmittel 100, z.B. Durchgangsschrauben 101, verschraubt. Eine Längsmittelachse 102 der Durchgangsschraube 101 verläuft in etwa im Mittel der Gesamtdicke 99 der Paneele 92 und rechtwinkelig zu den Stirnflächen 97, 98. Bevorzugt werden dazu selbstsichernde Schrauben verwendet, wobei im Bereich des Schraubenkopfes 103 und einer Gewindemutter 104 eine der Deckschichten 93, 94 eine Öffnung 105 aufweist, um die Schraubverbindung mit dem entsprechenden Werkzeugen zu befestigen. Ebenfalls ist im Bereich der Schraubenverbindung die Isolationslage bereichsweise entfernt.

Eine derartige Verbindung ermöglicht die feste Verankerung zwischen den Längswänden 90, 91 und einer quer dazu verlaufenden Querwand 30 und sichert gleichzeitig die Deckschichten 93, 94 und verhindert wirkungsvoll ein Ablösen dieser Deckschichten 93, 94 von der Isolationslage, da die Spannkraft der Schraubverbindung in die abgekanteten Deckschichten 93, 94 eingeleitet wird.

In der Fig. 7 ist eine weitere Ausführung der Verbindung zwischen der das Paneel 92 gebildeten Längswand 90 und einer durch das Paneel 92 gebildeten Dachwand 106 gezeigt. Die Dachwand 106 weist im Bereich eines Innenraumes 107 des Aufbaus 16 die die Stirnfläche 97 ausbildende, abgekantete innere Deckschicht 93 auf, während die äußere Deckschicht 94 die Längswand 90 überragend in gestreckter Form verläuft und wobei im Verbindungsbereich 89 die Isolationslage 96 endet. Eine die Längswand 90 überragender Bereich 108 der Deckschicht 94 dient zur Befestigung von Zubehörteilen 109, z.B. Außenbeleuchtung etc. Die Längswand 90 ist, wie bereits vorhergehend beschrieben, mit die Stirnfläche 98 ausbildenden, gegengleich zueinander gerichteten und überlappend abgewinkelten Deckschichten 93, 94 versehen. Die feste Verbindung zwischen der Dachwand 106 und der Längswand 90 wird durch ein senkrecht zu der Stirnfläche 98 erstreckendes Befestigungsmittel 100 erreicht, das im gezeigten Ausführungsbeispiel einen Senkkopf in der Deckschicht 94 der Dachwand 106 aufweist und etwa im Mittel der Gesamtdicke 99 der Längswand die abgekanteten Deckschichten 93, 94 der Längswand 90 durchragt und im Bereich der Isolationslage 96 in einem ausgenommen Bereich die Gewindemutter 104 angesetzt ist.

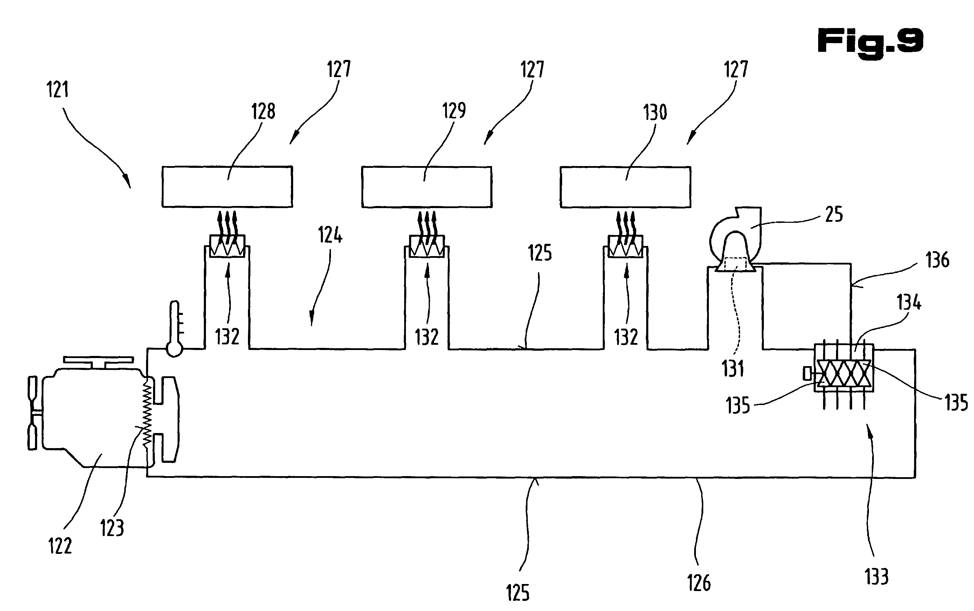

In der Fig. 8 ist eine andere Variante des Verbindungsbereiches 89 zwischen dem Paneel 92 als Dachwand 106 und einem Aufbauteil 110, z.B. einem Stahl- oder Blechprofil, Kunststoffprofil etc., des Aufbaus 16 gezeigt. Das Paneel 92 überragt mit der äußeren gestreckt verlaufenden Deckschicht 94 einen Schenkel 111 des Aufbauteils. An einem weiteren Schenkel 112 des Aufbauteils 110, der zum Schenkel 111 in etwa rechtwinkelig abgekantet ist, ist ein etwa U-förmiges Verbindungsprofil 113 mit einem ersten Schenkel 114 befestigt. Ein weiterer Schenkel 115 des Verbindungsprofils 113 ist gegenüber einem Basisschenkel 116, der zum Schenkel 114 rechtwinkelig verläuft, geneigt, wobei ein Zentrumswinkel 117 kleiner 90 ° ist. Die weitere und im gezeigten Ausführungsbeispiel innere Deckschicht 93 des Paneels 92 überragt die Isolationslage 96 und ist in Richtung der Deckschicht 94 entsprechend einen Komplementärwinkel zum Zentrumswinkel 117 abgewinkelt, wodurch der damit gebildete Überstand der Deckschicht 93 in einer durch den Schenkel 115 ausgebildeten Ebene und damit parallel zu dem Schenkel 115 verläuft. Im Überdeckungsbereich des Schenkels 115 mit dem abgewinkelten Bereich der Deckschicht 93 ist zur dichten Verbindung eine Klebeschicht 118 vorgesehen. Die am Basisschenkel 116 anliegende Deckschicht 94 ist über diese im rechten Winkel durchragende Verbindungsmittel 100, z.B. Senkkopf-Gewindeschrauben 119, die mit einer im Basisschenkel 116 angeordneten Gewindebohrung 120 zusammenwirkt, verschraubt. Selbstverständlich ist auch als Befestigungsmittel 119 eine Durchgangsschraube mit Gewindemutter, Niet etc. möglich. Die Befestigung zwischen dem Verbindungsprofil 113 und dem Aufbauteil 110 erfolgt in gleicher Weise mittels der Senkkopf-Gewindeschraube 119 und der Gewindebohrung 120 im Verbindungsprofil 113.

Dermaßen wird ein dichter und bewegungsfester Anschluß zwischen dem Aufbauteil 110 und der Dachwand 106, wie aber auch zwischen Längsseitenwänden, Querwände etc. erreicht.

Das Feuerwehr-Einsatzfahrzeug 2 ist, wie der Fig. 9 zu entnehmen und in dieser gezeigt, mit einer Heizvorrichtung 121, wie sie auch Stand der Technik bekannt ist, ausgestattet. Die von einem Fahrzeugmotor 122 erzeugte und in einem Kühlsystem 123 des Fahrzeugmotors 122 abzuführende Wärmeenergie wird durch einen Heizkreislauf 124 mit den entsprechenden Versorgungsleitungen 125 über ein Trägermedium 126 verschiedenen Verbrauchern 127, z.B. Kabinenheizung 128, Pumpenraumheizung 129, Druckabgangsheizung 130, Pumpenheizung 131 über entsprechende Wärmetauscher 132 zugeführt. Erfindungsgemäß ist im Heizkreislauf 124 eine Ventilanordnung 133 eingebunden, die aus einem vom Heizmedium 126 durchströmten Ventilblock 134 mit entsprechenden Ventilen 135 besteht. An die Ventile 135 sind, wie nur beispielhaft für die Löschmittelpumpe 25 gezeigt, Entleerungsleitungen 136 angeschlossen. Damit ist es möglich, beim Öffnen der Ventile 135 jedes an dieses angeschlossenes System sofort zu entleeren, um ein Einfrieren von wasserführenden Leitungen und Einrichtungen zu verhindern und vor allem die Entleerungsventile 135 selbst vor dem Einfrieren wirkungsvoll zu schützen.

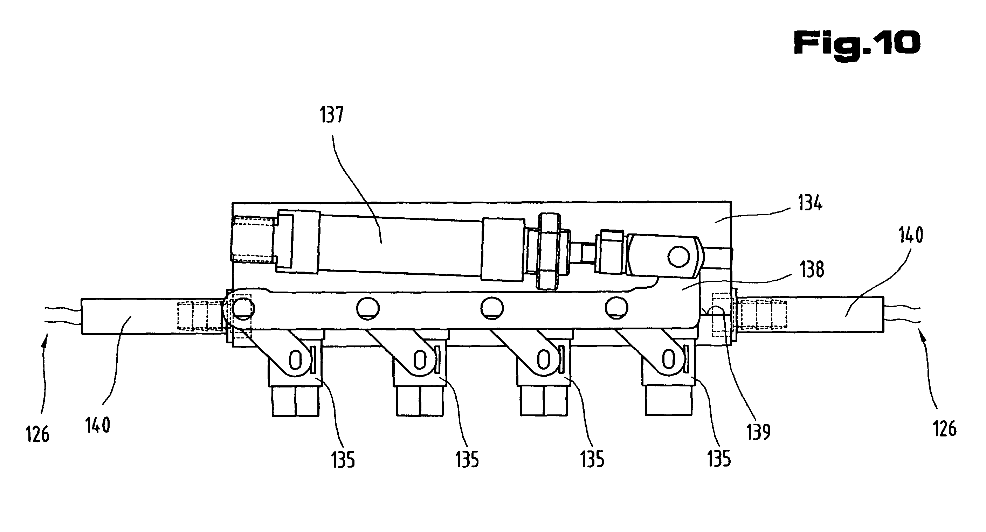

Wie nun besser der Fig. 10 zu entnehmen, ist es möglich, mehrere am Ventilblock 134 vorgesehene Ventile 135 mit einem Antriebsmittel 137, z.B. einem druckbeaufschlagten Zylinder und entsprechend ausgebildeten Betätigungselementen 138 gemeinsam und von einer entfernten Schaltstelle aus zu betätigen. Der Ventilblock 134 ist mit einem Durchgangskanal 139 für das Heizmedium 126 an den Heizkreislauf 124 über Verbindungsleitungen 140 angeschlossen, wodurch er durch Betrieb des Fahrzeugmotors 122 (siehe Fig. 9), der zur Versorgung unterschiedlichster Aggregate in einem Einsatzfall ständig in Betrieb ist und damit Wärme liefert, mit dem Heizmedium durchströmt und damit wirkungsvoll eine Ventilvereisung, durch welche die Entleerung der wichtigen Leitungen verhindert werden könnte, vermieden wird.

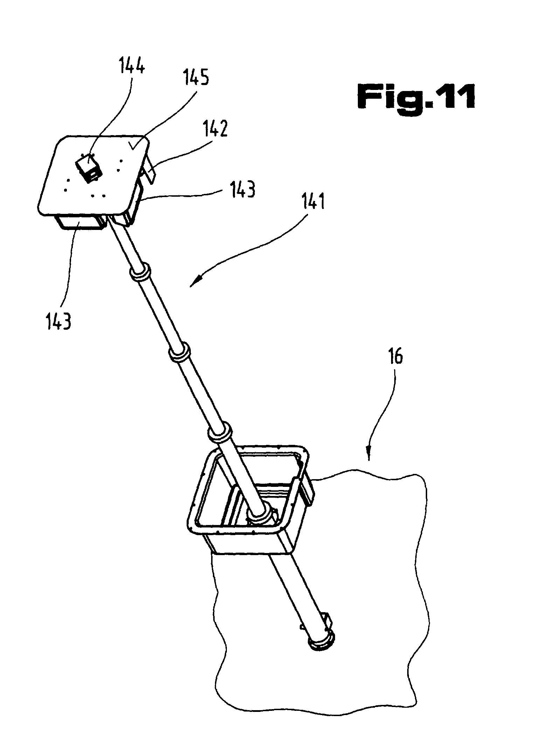

Wie nun weiters der Fig. 11 zu entnehmen, ist das Feuerwehr-Einsatzfahrzeug 2 gegebenenfalls mit einem im Aufbau 16 insbesondere im Aufbau integriert angeordneten teleskopierbaren Mast 141 versehen, der in seinem ausfahrbaren Endbereich 142 zusätzlich zu bekannten Scheinwerfern 143 die der Beleuchtung des Einsatzortes dienen erfindungsgemäß mit zumindest einer Kamera 144 bestückt ist. Über diese Kamera 144 ist es den Einsatzkräften möglich, auf einem Monitor z.B. in der Mannschafts- und/oder Gerätekabine oder auch in einem unabhängig davon in Einsatz befindlichen Kommandofahrzeug den Einsatzort und dessen Umgebung zu beobachten. Bevorzugt ist die Kamera 144 fernsteuerbar und zumindest um zwei Achsen, einer Vertikalachse und einer Horizontalachse verschwenkbar auf einer Plattform 145 oberhalb der Scheinwerfer 143 angeordnet.

Damit kann also auch eine Einsatzleitstelle, die nicht unmittelbar den Einsatzort in Augenschein nehmen kann, in die Lage versetzt werden, Einsätze wirkungsvoll zu planen und zu koordinieren.

Zusätzlich ist es auch möglich, wie der Fig. 1 weiters zu entnehmen, ein tragbares Steuer- und Überwachungsterminal 146 vorzusehen, das mit der ortsfest im Kraftfahrzeug 1 angeordneten Steuer- und Überwachungseinrichtung 26 in drahtloser Kommunikationsverbindung bei bedarfsweiser Inbetriebnahme des Steuer- und Überwachungsterminals 146 steht. Dieses Steuer- und Überwachungsterminal 146 ist mit den wesentlichen für den Betrieb der technischen Einrichtungen wie Antriebsaggregat, Nebenaggregate, Pumpe, Werfer, Tank, Generator, Mast etc. erforderlichen Steuerorganen 147 und Überwachungsorganen 148 und mit Kommunikationseinrichtungen 149 z.B. Bildschirm, Lautsprecher, Mikrofon etc. ausgestattet. Damit kann unabhängig vom Standort der Einsatzkraft der Einsatz gesteuert und überwacht werden. Weiters ist auch eine Vernetzung mehrerer Einsatzfahrzeuge dadurch möglich, daß wesentliche Daten an ein zentrales Einsatzkommando zur Überwachung und Steuerung drahtlos übermittelt werden um so die Effizient eines Einsatzes noch weiter durch bessere Koordination zu steigern.

Der Ordnung halber sei abschließend darauf hingewiesen, daß zum besseren Verständnis des Aufbaus des Lastkraftwagens dieser bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2, 3; 4, 5; 6, 7, 8; 9, 10; 11 gezeigten Ausführungen den Gegenstand von eigenständigen, erfindungsgemäßen Lösungen bilden.

### Bezugszeichenaufstellung

- 1: Lastkraftwagen
- 2: Feuerwehr-Einsatzfahrzeug
- 3: Fahrgestellrahmen
- 4: Fahrgestell
- 5: Doppelkabine

- 6: Fahrerkabine
- 7: Mannschafts- und/oder Gerätekabine
- 8: Dämpfungselement
- 9: Endbereich
- 10: Aufstandsfläche

- 11: Achse
- 12: Schwenklageranordnung
- 13: Antriebsmotor
- 14: Boden
- 15: Endbereich

- 16: Aufbau
- 17: Tank
- 18: Löschmittel
- 19: Längsseitenwand
- 20: Querseitenwand

- 21: Rolladen
- 22: Einbau
- 23: Gerät
- 24: Versorgungsleitung
- 25: Löschmittelpumpe

- 26: Steuer- und Überwachungseinheit
- 27: Durchgang
- 28: Distanz
- 29: Rückwand
- 30: Querwand

- 31: Verbindungsvorrichtung
- 32: Balgdichtelement
- 33: Tür
- 34: Einstiegsöffnung
- 35: Treppenelement

- 36: Aufstiegsvorrichtung
- 37: Schwenkachse
- 38: Wandteil
- 39: Ausschnitt
- 40: Ausschnitt

- 41: Befestigungsrahmen
- 42: Schenkel
- 43: U-Profil
- 44: Schenkel
- 45: Verbindungsmittel

- 46: Haftvorrichtung
- 47: Anschlagrahmen
- 48: Hohlprofil
- 49: Dauermagnete
- 50: Versteifungsrippe

- 51: Deckrahmen
- 52: Schenkel
- 53: Schenkel
- 54: Schenkellänge
- 55: Haltearm

- 56: Spiral-Zugfeder
- 57: Dämpfungselement
- 58: Boden
- 59: Treppenstufe
- 60: Treppenstufe

- 61: Umrißlinie
- 62: Radius
- 63: Radius
- 64: Oberfläche
- 65: Betätigungsvorrichtung

- 66: Mitnehmer
- 67: Endbereich
- 68: Scharnieranordnung
- 69: Schwenkachse
- 70: Oberfläche

- 71: Lichtaustrittsfläche
- 72: Beleuchtungseinrichtung
- 73: Klappe
- 74: Staufach
- 75: Lageranordnung

- 76: Arretiervorrichtung
- 77: Lagerkonsole
- 78: Führungsrohr
- 79: Lagerrohr
- 80: Befestigungsmittel

- 81: Spiraldruckfeder
- 82: Axiallager
- 83: Pfeil
- 84: Verstellweg
- 85: Unterseite

- 86: Bremsarm
- 87: Bremsbelag
- 88: Folie
- 89: Verbindungsbereich
- 90: Längswand

- 91: Längswand
- 92: Paneel
- 93: Deckschicht
- 94: Deckschicht
- 95: Kern

- 96: Isolationsanlage
- 97: Stirnfläche
- 98: Stirnfläche
- 99: Gesamtdicke
- 100: Befestigungsmittel

- 101: Durchgangsschraube
- 102: Längsmittelachse
- 103: Schraubenkopf
- 104: Gewindemutter
- 105: Öffnung

- 106: Dachwand
- 107: Innenraum
- 108: Bereich
- 109: Zubehörteil
- 110: Aufbauteil

- 111: Schenkel
- 112: Schenkel
- 113: Verbindungsprofil
- 114: Schenkel
- 115: Schenkel

- 116: Basisschenkel
- 117: Zentrumswinkel
- 118: Klebeschicht
- 119: Senkkopf-Gewindeschrauben
- 120: Gewindebohrung

- 121: Heizvorrichtung
- 122: Fahrzeugmotor
- 123: Kühlsystem
- 124: Heizkreislauf
- 125: Versorgungsleitung

- 126: Medium
- 127: Verbraucher
- 128: Kabinenheizung
- 129: Pumpenraumheizung
- 130: Druckabgangsheizung

- 131: Pumpenheizung
- 132: Wärmetauscher
- 133: Ventilanordnung
- 134: Ventilblock
- 135: Ventil

- 136: Entleerungsleitung
- 137: Antriebsmittel
- 138: Betätigungselement
- 139: Durchgangskanal
- 140: Verbindungsleitung

- 141: Mast
- 142: Endbereich
- 143: Scheinwerfer
- 144: Kamera
- 145: Plattform

- 146: Steuer- und Überwachungsterminal
- 147: Steuerorgan
- 148: Überwachungsorgan
- 149: Kommunikationseinrichtung

## Patentansprüche

1. Lastkraftwagen (1), insbesondere Feuerwehr-Einsatzfahrzeug (2) mit einem auf einem Fahrgestellrahmen (3) gelagerten Aufbau mit einer um eine quer zur Fahrtrichtung verlaufenden, horizontalen Achse (11) verschwenkbaren Fahrerkabine (6) und zumindest einer weiteren über eine einen Durchgang (27) ausbildenden, lösbaren Verbindungsvorrichtung (31) mit der Fahrerkabine (6) verbundenen, auf dem Fahrgestellrahmen (3) gelagerten Mannschafts- und/oder Gerätekabine (7) und einem unabhängig von der Fahrerkabine (6) und der Mannschafts- und/oder Gerätekabine (7) auf dem Fahrgestellrahmen (3) gelagerten Aufbau (16) mit Einbauten für die Lagerung von Werkzeugen und Einsatzgeräten und gegebenenfalls mit Löscheinrichtungen, bestehend aus zumindest einem Tank (17) für Löschmittel (18) und mit einer über Versorgungsleitungen (24) mit dem Tank (17) strömungsverbundenen Löschmittelpumpe (25) und mit Einstiegs- und/oder Bedienöffnungen in Quer- und/oder Längsseitenwänden des Aufbaus (16), und wobei die Verbindungsvorrichtung (31) durch ein flexibles Balgdichtelement (32) gebildet ist, das über einen Befestigungsrahmen (41) an einer Querwand (30) der Mannschafts- und/oder Gerätekabine (7) befestigt ist und über eine Haftvorrichtung (46) mit einer Rückwand (29) der Fahrerkabine (6) lösbar verbunden ist und im Bereich zumindest einer Einstiegsöffnung (34) der Mannschafts- und/oder Gerätekabine (7) eine Aufstiegsvorrichtung (36) angeordnet ist, **dadurch gekennzeichnet, dass** am Balgdichtelement (32) ein, einem auf der Rückwand (29) der Fahrerkabine (6) angeordneten Deckrahmen (51) zugewandt, ein Anschlagrahmen (47) befestigt ist, der über einen Haltearm (55) relativ zur Querwand (30) positioniert gehalten ist

2. Lastkraftwagen nach Anspruch 1, **dadurch gekennzeichnet, dass** der Deckrahmen (51) das Balgdichtelement (32) bereichsweise umfassend auf der Rückwand (29) der Fahrerkabine (6) angeordnet ist

3. Lastkraftwagen nach Anspruch 1 oder 2, **dadurch gekennzeichnet, dass** die Haftvorrichtung (46) durch am Anschlagrahmen (47) angeordnete Dauermagnete (49) gebildet ist.

4. Lastkraftwagen nach einem der vorhergehenden Ansprüche, **dadurch gekennzeichnet, dass** am Anschlagrahmen (47) mehrere in Umfangsrichtung des Anschlagrahmens (47) zueinander beabstandete Dauermagnete (49) angeordnet sind.

5. Lastkraftwagen nach einem der vorhergehenden Ansprüche, **dadurch gekennzeichnet, dass** am Deckrahmen (51) dem Anschlagrahmen (47) zugewandt elastische Dämpfungselemente (57) angeordnet sind.

6. Lastkraftwagen nach einem der vorhergehenden Ansprüche, **dadurch gekennzeichnet, dass** der Anschlagrahmen (47) durch ein Hohlprofil (48), insbesondere ein Rechteckprofil, gebildet ist.

7. Lastkraftwagen nach einem der vorhergehenden Ansprüche, **dadurch gekennzeichnet, dass** in einem Hohlraum des Hohlprofiles (48) die Dauermagnete (49) angeordnet sind.

8. Lastkraftwagen nach einem der vorhergehenden Ansprüche, **dadurch gekennzeichnet, dass** der Deckrahmen (51) durch ein einen etwa L-förmigen Querschnitt ausbildendes Abdeckprofil gebildet ist, das mit einem Schenkel (52) an der Rückwand (29) befestigt ist und der weitere Schenkel rechtwinkelig in Richtung der Querwand (30) vorragt.

9. Lastkraftwagen nach einem der vorhergehenden Ansprüche, **dadurch gekennzeichnet, dass** eine Schenkellänge (54) des vorragenden Schenkels (53) etwa 2/3 einer Distanz (28) zwischen der Rückwand (29) und der Querwand (30) beträgt.

10. Lastkraftwagen nach einem der vorhergehenden Ansprüche, **dadurch gekennzeichnet, dass** das Balgdichtelement (32) über ein etwa einen U-förmigen Querschnitt ausbildendes Rahmenprofil oder einer Ausformung der Querwand (30) an dieser befestigt ist.

11. Lastkraftwagen nach einem der vorhergehenden Ansprüche, **dadurch gekennzeichnet, dass** das Balgdichtelement (32) aus flexiblen, gummierten Leinengewebe, faserverstärktem Kunststoff etc. gebildet ist.

12. Lastkraftwagen nach einem der vorhergehenden Ansprüche, **dadurch gekennzeichnet, dass** zwischen dem Haltearm und dem Anschlagrahmen (47) eine einstellbare Tragseilandordnung, Federanordnung etc. angeordnet ist.

13. Lastkraftwagen nach einem der vorhergehenden Ansprüche, **dadurch gekennzeichnet, dass** die Federanordnung mit Einstellmittel zur Lagejustierung des Anschlagrahmens (47) bzgl. seiner Position zur Querwand (30) versehen ist

14. Lastkraftwagen nach einem der vorhergehenden Ansprüche, **dadurch gekennzeichnet, dass** der Anschlagrahmen (47) bevorzugt aus Aluminium, der Deckrahmen (51) und das Rahmenprofil bevorzugt aus Stahlblech gebildet sind.

15. Lastkraftwagen nach einem der vorhergehenden Ansprüche, **dadurch gekennzeichnet, dass** die Aufstiegsvorrichtung (36) in bekannter Weise durch ein um eine innerhalb einer Außenbegrenzung des Aufbaus angeordnete zu einer Aufstandsfläche (10) senkrecht verlaufende Schwenkachse (37) schwenkbares, mehrstufiges Treppenelement (35) gebildet ist.

16. Lastkraftwagen nach einem der vorhergehenden Ansprüche, **dadurch gekennzeichnet, dass** das Treppenelement (35) aus einer eingeschwenkten Stellung, bei der ein Wandteil (38) fluchtend mit der Außenbegrenzung verläuft, in eine ausgeschwenkte Stellung, bei der der Wandteil (38) in einem Winkel zwischen 0 ° und 90 ° einnimmt, verschwenkbar ist.

17. Lastkraftwagen nach einem der vorhergehenden Ansprüche, **dadurch gekennzeichnet, dass** das Treppenelement (35), unabhängig von der jeweiligen verschwenkten Stellung bei Belastung mit einer Unterseite (85) eines Treppenfortsatzes auf einem mit dem Aufbau fest verbundenen Bremsarm (86) abgestützt ist.

18. Lastkraftwagen nach einem der vorhergehenden Ansprüche, **dadurch gekennzeichnet, dass** am Bremsarm (86) ein Bremsbelag (87) angeordnet ist.

19. Lastkraftwagen nach einem der vorhergehenden Ansprüche, **dadurch gekennzeichnet, dass** das Treppenelement (35) auf der Schwenkachse (37) gegen die Wirkung einer Federkraft in Richtung der Aufstandsfläche (10) verstellbar gelagert ist.

20. Lastkraftwagen nach einem der vorhergehenden Ansprüche, **dadurch gekennzeichnet, dass** in einem Innenraum des Treppenelementes (35) ein Staufach (74) angeordnet ist.

21. Lastkraftwagen nach einem der vorhergehenden Ansprüche, **dadurch gekennzeichnet, dass** im Bereich des Treppenelementes (35) im Wandteil (38) eine Beleuchtungseinrichtung (72) mit einer Lichtaustrittsfläche (71) in Richtung des Treppenelementes (35) angeordnet ist.

22. Lastkraftwagen nach einem der vorhergehenden Ansprüche, **dadurch gekennzeichnet, dass** die Beleuchtungseinrichtung (72) durch eine auf einer Oberfläche des Wandteils (38) oder des Treppenelementes (35) angeordnete Elektro- Leuchtfolie gebildet ist.

23. Lastkraftwagen nach einem der vorhergehenden Ansprüche, **dadurch gekennzeichnet, dass** den Aufbau (16) ausbildende Wände insbesondere Längsseitenwände (19) und Dachwände (106) aus Paneelen (92) mit Deckschichten (93, 94) und Isolierlagen (96) z.B. Metall/Kunststoff, Kunststoff/Metall, Kunststoff/Kunststoff, Metall/Metall gebildet sind.

24. Lastkraftwagen nach einem der vorhergehenden Ansprüche, **dadurch gekennzeichnet, dass** Stirnflächen (97, 98) der Paneele (92) durch einander überlappend abgewinkelte Schenkel der Deckschichten (93, 94) gebildet sind.

25. Lastkraftwagen nach einem der vorhergehenden Ansprüche, **dadurch gekennzeichnet, dass** Befestigungsmittel (100) wie Schrauben, Nieten etc. der Eck- und/oder Stoßverbindungen bevorzugt mit ihrer Längserstreckung senkrecht zu den Stirnflächen (97, 98) verlaufend angeordnet sind.

26. Lastkraftwagen nach einem der vorhergehenden Ansprüche, **dadurch gekennzeichnet, dass** Spannkräfte der Befestigungsmittel (100) bevorzugt in zu den Stirnflächen (97, 98) der Paneele (92) senkrechter Richtung wirken.

27. Lastkraftwagen nach einem der vorhergehenden Ansprüche, **dadurch gekennzeichnet, dass** für die Löschmittelpumpe (25) Pumpenleitungen und Löschmittelleitungen ein mit einem Kühl- und/oder Heizkreislauf (124) eines Fahrzeugmotors (122) strömungsverbundener und mit dem Kühl- bzw. Heizmedium durchströmter Entleerungs- Ventilblock (134) mit Ventilen (135) im Druck-Saugleitungsbereich der Löschanlage angeordnet ist.

28. Lastkraftwagen nach einem der vorhergehenden Ansprüche, **dadurch gekennzeichnet, dass** im Aufbau (16) ein in zur Aufstandsfläche (10) senkrechter Richtung verstellbarer Mast (11) als Beleuchtungsträger angeordnet ist der zusätzlich mit zumindest einer Kamera (144) versehen ist.

29. Lastkraftwagen nach einem der vorhergehenden Ansprüche, **dadurch gekennzeichnet, dass** die Steuer- und Überwachungseinrichtung (26) ein entnehmbares, tragbares Steuer- und Überwachungsterminal (146) umfaßt, das mit der Steuer- und Überwachungseinrichtung (26) drahtlos kommunikationsverbunden ist.

## Claims

1. Truck (1), in particular a firefighting utility vehicle (2), having a structure mounted on a chassis frame (3) with a driver's cab (6) pivotable about a horizontal axis (11) extending transversely to the travel direction and at least one other crew and/or equipment cab (7) mounted on the chassis frame (3) communicating with the driver's cab (6) via a releasable connecting mechanism (31) forming a passageway (27), and a structure (16) independent of the driver's cab (6) and the crew and/or equipment cab (7) mounted on the chassis frame (3) having built-in fixtures for storing tools and equipment and optionally having extinguisher units consisting of at least one tank (17) for extinguisher medium (18) and an extinguisher pump (25) with a flow connection to the tank (17) via extinguisher lines (24), and with entry and/or service openings in transverse and/or longitudinal side walls of the structure (16), and wherein the connecting mechanism (31) is a flexible bellows seal element (32) which is secured by means of a fixing frame (41) to a transverse wall (30) of the crew and/or equipment cab (7) and releasably connected to a rear wall (29) the driver's cab (6) by means of a retaining connection (46), and a mounting device (36) is provided in the region of at least one entry opening (34) of the crew and/or equipment cab (7), **characterised in that** the bellows seal element (32) has a stop frame (47) facing a roof frame (51) on the rear wall (29) of the driver's cab (6) which is retained in position relative to the transverse wall (30) by means of a retaining arm (55).

2. Truck as claimed in claim 1, **characterised in that** a roof frame (5 1 ) is provided on the rear wall (29) of the driver's cab (6) which encloses certain regions of the bellows seal element (32).

3. Truck as claimed in claim 1 or 2, **characterised in that** the retaining connection (46) is provided in the form of permanent magnets (49) disposed in the stop frame (47).

4. Truck as claimed in of the preceding claims, **characterised in that** several permanent magnets (49) are disposed on the stop frame (47), spaced apart from one another in the circumferential direction of the stop frame (47).

5. Truck as claimed in one of the preceding claims, **characterised in that** elastic absorber elements (57) are provided on the roof frame (51) facing the stop frame (47).

6. Truck as claimed in one of the preceding claims, **characterised in that** the stop frame (47) is a hollow section (48), in particular a rectangular section.

7. Truck as claimed in one of the preceding claims, **characterised in that** the permanent magnets (49) are disposed in a cavity of the hollow section (48).

8. Truck as claimed in one of the preceding claims, **characterised in that** the roof frame (51) is a blanking section with a more or less L-shaped cross section, which is secured to the rear wall (29) by one leg (52) and the other leg projects at a right angle in the direction of the transverse wall (30).

9. Truck as claimed in one of the preceding claims, **characterised in that** a leg length (54) of the projecting leg (53) is approximately 2/3 of a distance (28) between the rear wall (29) and the transverse wall (30).

10. Truck as claimed in one of the preceding claims, **characterised in that** the bellows seal element (32) is secured by means of a frame section with an approximately U-shaped cross section to the transverse wall (30) or to a cut-out in the latter.

11. Truck as claimed in one of the preceding claims, **characterised in that** the bellows seal element (32) is made from flexible, rubber-backed linen fabric, fibre-reinforced plastic, etc..

12. Truck as claimed in one of the preceding claims, **characterised in that** an adjustable supporting rope system, spring arrangement, etc., is disposed between the retaining arm and the stop frame (47).

13. Truck as claimed in one of the preceding claims, **characterised in that** the spring arrangement is provided with adjusting means for adjusting the positioning of the stop frame (47) with respect to its position relative to the transverse wall (30).

14. Truck as claimed in one of the preceding claims, **characterised in that** the stop frame (47) is preferably made from aluminium, whilst the roof frame (51) and the frame section are preferably made from sheet steel.

15. Truck as claimed in one of the preceding claims, **characterised in that** the mounting device (36) is provided in a manner known per se in the form of a multi-level step element (35) which is pivotable within an external boundary of the structure about a pivot axis (37) extending perpendicular to a support surface (10).

16. Truck as claimed in one of the preceding claims, **characterised in that** the step element (35) is pivotable from a pivoted-in position, in which a wall part (38) extends flush with the external boundary, into a pivoted-out position, in which the wall part (38) assumes an angle of between 0 ° and 90 °.

17. Truck as claimed in one of the preceding claims, **characterised in that** the step element (35), is supported by an underside (85) of a step projection on a brake arm (86) fixedly connected to the structure when placed under load, irrespective of the pivoted position it assumes.

18. Truck as claimed in one of the preceding claims, **characterised in that** a brake pad (87) is provided on the brake arm (86).

19. Truck as claimed in one of the preceding claims, **characterised in that** the step element (35) is mounted on the pivot axis (37) so as to be displaceable in the direction of the support surface (10) against the action of a spring force.

20. Truck as claimed in one of the preceding claims, **characterised in that** a stowage compartment (74) is provided in an interior of the step element (35).

21. Truck as claimed in one of the preceding claims, **characterised in that** a light unit (72) with a light-emitting surface (71) in the direction of the step element (35) is provided in the wall part (38) in the region of the step element (35).

22. Truck as claimed in one of the preceding claims, **characterised in that** the light unit (72) is provided in the form of an electro-luminescent film on a surface of the wall part (38) or the step element (35).

23. Truck as claimed in one of the preceding claims, **characterised in that** walls forming the structure (16), in particular longitudinal side walls (19) and roof panels (106), are provided in the form of panels (92) with facing layers (93, 94) and insulation layers (96), e.g. metal/plastic, plastic/metal, plastic/plastic, metal/metal.

24. Truck as claimed in one of the preceding claims, **characterised in that** end faces (97, 98) of the panels (92) are provided in the form of overlapping bent-back legs of the facing layers (93, 94).

25. Truck as claimed in one of the preceding claims, **characterised in that** fixing means (100) such as bolts, rivets, etc., of the comer and/or abutting connections preferably run with their longitudinal extension perpendicular to the end faces (97, 98).

26. Truck as claimed in one of the preceding claims, **characterised in that** tension forces of the fixing means (100) preferably act in the direction perpendicular to the end faces (97, 98) of the panels (92).

27. Truck as claimed in one of the preceding claims, **characterised in that** a drainage valve block (134) incorporating valves (135) in the pressure-suction line region of the extinguisher system are provided for the extinguisher pump (25), pump lines and extinguisher lines, establishing a flow connection with a cooling and/or heating circuit (124) of a vehicle engine (122) and through which cooling or heating medium is circulated.

28. Truck as claimed in one of the preceding claims, **characterised in that** a mast (11) which is displaceable in the direction perpendicular to the support surface (10) is provided on the structure (16) as a support for lighting and is additionally provided with at least one camera (144).

29. Truck as claimed in one of the preceding claims, **characterised in that** the control and monitoring unit (26) has a removable, portable control and monitoring terminal (146) which wirelessly communicates with the control and monitoring unit (26).

## Revendications

1. Véhicule utilitaire (1), en particulier véhicule à incendie (2) avec une structure logée sur un châssis de roulement (3) avec une cabine de conducteur (6) apte à pivoter autour d'un axe horizontal (11) s'étendant transversalement à la direction de roulement et au moins une autre cabine d'équipage et/ou d'appareils (7) reliée à la cabine de conducteur (6) par un dispositif de liaison amovible (31), formant un passage (27), logée sur le châssis de roulement (3) et avec une structure (16), logée indépendamment de la cabine de conducteur (6) et de la cabine d'équipage et/ou d'appareils (7) sur le châssis de roulement (3), avec des installations pour stocker des outils et des appareils d'intervention et le cas échéant avec des installations d'extinction, constituées d'au moins un réservoir (17) pour des produits d'extinction (18) et avec une pompe de produit d'extinction (25) reliée, quant à l'écoulement, par des lignes d'alimentation (24) au réservoir (17) et avec des ouvertures d'embarquement et/ou d'actionnement dans des parois latérales transversales et/ou longitudinales de la structure (16) et où le dispositif de liaison (31) est formé par un élément d'étanchéité flexible formant soufflet (32) qui est fixé par un cadre de fixation (41) à une paroi transversale (30) de la cabine d'équipage et/ou d'appareils (7) et qui est relié amoviblement par un dispositif d'adhésion (46) à une paroi arrière (29) de la cabine de conducteur (6), et au voisinage d'au moins une ouverture d'embarquement (34) de la cabine d'équipage et/ou d'appareils (7), un dispositif de montée (36) est disposé, **caractérisé en ce qu'**il est fixé à l'élément d'étanchéité formant soufflet (32) un cadre de butée (47) orienté vers un cadre de recouvrement (51) disposé à la paroi arrière (29) de la cabine de conducteur (6), qui est maintenu en position par un bras de retenue (55) relativement à la paroi transversale (30).

2. Véhicule utilitaire selon la revendication 1, **caractérisé en ce que** le cadre de recouvrement (51), en entourant l'élément d'étanchéité formant soufflet (32) par zone, est disposé sur la paroi arrière (29) de la cabine de conducteur (6).

3. Véhicule utilitaire selon la revendication 1 ou 2, **caractérisé en ce que** le dispositif d'adhésion (46) est formé par des aimants permanents (49) disposés au cadre de butée (47).

4. Véhicule utilitaire selon l'une des revendications précédentes, **caractérisé en ce que** sont disposés au cadre de butée (47) plusieurs aimants permanents (49) espacés les uns des autres dans la direction périphérique du cadre de butée (47).

5. Véhicule utilitaire selon l'une des revendications précédentes, **caractérisé en ce que** sont disposés au cadre de recouvrement (51) des éléments d'amortissement élastiques (57) orientés vers le cadre de butée (47).

6. Véhicule utilitaire selon l'une des revendications précédentes, **caractérisé en ce que** le cadre de butée (47) est formé par un profilé creux (48), en particulier un profilé rectangulaire.

7. Véhicule utilitaire selon l'une des revendications précédentes, **caractérisé en ce que** les aimants permanents (49) sont disposés dans un espace creux du profilé creux (48).

8. Véhicule utilitaire selon l'une des revendications précédentes, **caractérisé en ce que** le cadre de recouvrement (51) est formé par un profilé de recouvrement d'une section transversale à peu près en forme de L, qui est fixé avec une branche (52) à la paroi arrière (29), et l'autre branche fait saillie à angle droit en direction de la paroi transversale (30).

9. Véhicule utilitaire selon l'une des revendications précédentes, **caractérisé en ce qu'**une longueur (54) de la branche saillante (53) représente environ 2/3 d'une distance (28) entre la paroi arrière (29) et la paroi transversale (30).

10. Véhicule utilitaire selon l'une des revendications précédentes, **caractérisé en ce que** l'élément d'étanchéité formant soufflet (32) est fixé par un profilé de cadre d'une section transversale à peu près en forme de U ou un moulage de la paroi transversale (30) à celle-ci.

11. Véhicule utilitaire selon l'une des revendications précédentes, **caractérisé en ce que** l'élément d'étanchéité formant soufflet (32) est réalisé en un tissu de lin caoutchouté flexible, en matériau synthétique renforcé par des fibres etc.

12. Véhicule utilitaire selon l'une des revendications précédentes, **caractérisé en ce qu'**un agencement de câble porteur réglable, un agencement de ressort etc. est disposé entre le bras de retenue et le cadre de butée (47).

13. Véhicule utilitaire selon l'une des revendications précédentes, **caractérisé en ce que** l'agencement de ressort est muni de moyens de réglage pour ajuster la position du cadre de butée (47) respectivement sa position relativement à la paroi transversale (30).

14. Véhicule utilitaire selon l'une des revendications précédentes, **caractérisé en ce que** le cadre de butée (47) est réalisé de préférence en aluminium, le cadre de recouvrement (51) et le profilé de cadre de préférence en tôle d'acier.

15. Véhicule utilitaire selon l'une des revendications précédentes, **caractérisé en ce que** le dispositif de montée (36) est formé d'une manière connue par un élément d'escalier à plusieurs marches (35) apte à pivoter autour d'un axe de pivotement (37) disposé à l'intérieur d'une délimitation extérieure de la structure, s'étendant perpendiculairement à une face d'appui (10).

16. Véhicule utilitaire selon l'une des revendications précédentes, **caractérisé en ce que** l'élément d'escalier (35) peut être amené à pivoter à partir d'une position rentrée par pivotement, dans laquelle une partie de paroi (38) est alignée avec une délimitation extérieure, dans une position sortie par pivotement, dans laquelle la partie de paroi (38) occupe un angle entre 0° et 90°.

17. Véhicule utilitaire selon l'une des revendications précédentes, **caractérisé en ce que** l'élément d'escalier (35), indépendamment de la position de pivotement respective, dans le cas d'une charge, s'appuie avec un côté inférieur (85) d'un prolongement d'escalier sur un bras de freinage (86) relié solidement à la structure.

18. Véhicule utilitaire selon l'une des revendications précédentes, **caractérisé en ce qu'**une garniture de frein (87) est disposée au bras de freinage (86).

19. Véhicule utilitaire selon l'une des revendications précédentes, **caractérisé en ce que** l'élément d'escalier (35) est logé d'une manière déplaçable sur l'axe de pivotement (37) contre l'effet d'une force de ressort en direction de la face d'appui (10).

20. Véhicule utilitaire selon l'une des revendications précédentes, **caractérisé en ce qu'**une case de stockage (47) est disposée dans un espace intérieur de l'élément d'escalier (35).

21. Véhicule utilitaire selon l'une des revendications précédentes, **caractérisé en ce qu'**il est disposé dans la zone de l'élément d'escalier (35) dans la partie de paroi (38) une installation d'éclairage (72) avec une face de sortie de lumière (71) en direction de l'élément d'escalier (35).

22. Véhicule utilitaire selon l'une des revendications précédentes, **caractérisé en ce que** l'installation d'éclairage (72) est formée par une feuille électro-lumineuse disposée sur une surface de la partie de paroi (38) ou de l'élément d'escalier (35).

23. Véhicule utilitaire selon l'une des revendications précédentes, **caractérisé en ce que** les parois formant la structure (16), en particulier les parois latérales longitudinales (19) et les parois de plafond (106) sont formées par des panneaux (92) avec des couches de recouvrement (93, 94) et des couches d'isolation (96), par exemple métal/matériau synthétique, matériau synthétique/métal, matériau synthétique/matériau synthétique, métal/métal.

24. Véhicule utilitaire selon l'une des revendications précédentes, **caractérisé en ce que** les faces frontales (97, 98) des panneaux (92) sont formées par des branches coudées, qui se chevauchent, des couches de recouvrement (93, 94).

25. Véhicule utilitaire selon l'une des revendications précédentes, **caractérisé en ce que** des moyens de fixation (100), comme des vis, des rivets, etc. des assemblages d'angle et/ou bout-à-bout sont disposés de préférence avec leur extension longitudinale perpendiculairement aux faces frontales (97, 98).

26. Véhicule utilitaire selon l'une des revendications précédentes, **caractérisé en ce que** des forces de serrage des moyens de fixation (100) agissent de préférence dans la direction perpendiculaire aux faces frontales (97, 98) des panneaux (92).

27. Véhicule utilitaire selon l'une des revendications précédentes, **caractérisé en ce qu'**il est disposé pour la pompe de produits d'extinction (25), des conduits de pompe et des conduits de produits d'extinction, un bloc de soupapes de vidange (134) en liaison d'écoulement avec un circuit de refroidissement et/ou de chauffage (124) d'un moteur de véhicule (122) et traversé par le milieu de refroidissement respectivement de chauffage, avec des soupapes (135) dans la zone de conduite de pression/aspiration de l'installation d'extinction.

28. Véhicule utilitaire selon l'une des revendications précédentes, **caractérisé en ce qu'**il est disposé dans la structure (16) un mat (11) ajustable dans la direction perpendiculaire à la face d'appui (10) comme support d'éclairage qui est pourvu additionnellement d'au moins une caméra (144).

29. Véhicule utilitaire selon l'une des revendications précédentes, **caractérisé en ce que** l'installation de commande et de surveillance (26) comprend un terminal de commande et de surveillance portable (146) pouvant être retiré, qui communique sans fil avec l'installation de commande et de surveillance (26).
